# EUROPÄISCHE PATENTSCHRIFT

(11) **EP 1 158 817 B1**
(45) Veröffentlichungstag und Bekanntmachung des Hinweises auf die Patenterteilung: **28.07.2004**
(21) Anmeldenummer: 01440119.4
(22) Anmeldetag: 23.04.2001
(51) Int. Cl.: H04Q 3/00

(54) **Verfahren und Vorrichtung zur Konfiguration von Diensten in einem Telekommunikationsnetz**
Method and device for configuring services in a telecommunicationsnetwork
Méthode et dispositif pour configurer des services dans un réseau de télécommunication

(30) Priorität: 20.05.2000 DE 10025137
(43) Veröffentlichungstag der Anmeldung: 28.11.2001
(73) Patentinhaber: ALCATEL, 75008 Paris (FR)
(72) Erfinder: Kible, Peter, 74343 Sachsenheim (DE); Kible, Frank, 70806 Kornwestheim (DE)
(74) Vertreter: Rausch, Gabriele, Dr.

(56) Entgegenhaltungen:
- US-A- 5 918 214
- US-A- 6 047 322

## Beschreibung

Die vorliegende Erfindung betrifft ein Verfahren zur Konfiguration eines von einem Telekommunikationsnetz für einen Teilnehmer zu erbringenden Dienst, einen Barcode-Kennzeichner hierfür, ein Konfigurationsmodul sowie ein Erfassungsmodul hierfür.

Wenn ein Teilnehmer einen neuen Telekommunikations-Dienst nutzen möchte, beispielsweise im Zusammenhang mit der Anschaffung eines neuen Endgerätes, muss er über einen separaten Vorgang den Dienst bei einem Dienste-Anbieter, einem sogenannten "Service Provider, buchen. Typische Szenarien sehen beispielsweise folgendermaßen aus:

Ein Kunde kauft in einem Verkaufsgeschäft ein neues Telefon, besitzt jedoch noch keinen Teilnehmeranschluss zur Nutzung des Telefons an einem Telekommunikationsnetz. Der Kunde muss sich dann anschließend an den Kauf als neuer Teilnehmer für das Telekommunikationsnetz bei einem Dienste-Anbieter anmelden. Dies ist nicht nur mit einigem Aufwand verbunden, sondern für den Neu-Teilnehmer auch ärgerlich, weil er meist noch einige Tage warten muss, bis eine Teilnehmeranschlussleitung für ihn geschaltet ist.

In einem anderen Beispiel kauft der Kunde ein ISDN-Telefon (ISDN = Integrated Services Digital Network) oder einen ISDN-Adapter zum Anschluss eines Personal Computers an ein ISDN-Telekommunikationsnetz, verfügt jedoch nur über einen analog arbeitenden Teilnehmeranschluss. Erst nach einem separaten Antrag zur Umschaltung des analogen Teilnehmeranschlusses auf ISDN kann der Kunde als ISDN-Teilnehmer seine neuen Endgeräte nutzen.

Auch wenn ein Teilnehmer lediglich einen neuen Dienst für einen bereits bestehenden Teilnehmeranschluss buchen will, beispielsweise Rückruf-Bei-Besetzt, muss er dies per schriftlichem oder mündlichem Antrag beim Dienste-Anbieter für seinen Teilnehmeranschluss umständlich erledigen.

Auch für den Dienste-Anbieter sowie für den Betreiber des Teilnehmeranschlusses ist das bekannte Verfahren umständlich und fehlerträchtig, denn er muss jeweils die Angaben des (Neu)-Teilnehmers in ein Konfigurationssystem des Telekommunikationsnetzes eingeben, beispielsweise über eine Eingabe-Oberfläche einen Service-Management-Systemes eines sogenannten Telecommunications Management Networks (TMN) und/oder an einem Bedienplatz einer Vermittlungsstelle, die die Teilnehmeranschlussleitung des Teilnehmers bedient.

Es ist daher Aufgabe der vorliegenden Erfindung, auf einfache und zuverlässige Weise einen von einem Telekommunikationsnetz für einen Teilnehmer zu erbringenden Dienst zu konfigurieren.

Diese Aufgabe wird gelöst durch ein Verfahren zur Konfiguration eines von einem Telekommunikationsnetz, bei dem dem zu erbringenden Dienst ein Barcode zugewiesen wird, der Barcode durch eine Erfassungseinrichtung von einem Barcode-Kennzeichner eingelesen wird, die Erfassungseinrichtung einer Konfigurationseinrichtung des Telekommunikationsnetzes aus dem Barcode ermittelte Barcode-Daten übermittelt und die Konfigurationseinrichtung anhand der Barcode-Daten den Dienst für den Teilnehmer konfiguriert.

Die Aufgabe wird ferner gelöst durch einen Barcode-Kennzeichner gemäß der technischen Lehre des Anspruchs 7, ein Konfigurationsmodul gemäß der technischen Lehre des Anspruchs 8, sowie einem Erfassungsmodul gemäß der technischen Lehre des Anspruchs 10.

Der Erfindung liegt dabei der Gedanke zugrunde, dass einem von einem Telekommunikationsnetz für einen Teilnehmer zu erbringenden Dienst ein eindeutiger Barcode zugewiesen wird, der über eine Erfassungseinrichtung, insbesondere eine erfindungsgemäß ausgerüstete Scanner-Kasse, in einem Verkaufsgeschäft eingelesen wird. Der Barcode kann beispielsweise an einem Endgerät angebracht sein, das in dem Verkaufsgeschäft verkauft wird. Aus dem Barcode ermittelt die Erfassungseinrichtung Barcode-Daten, die sie dann einer Konfigurationseinrichtung des Telekommunikationsnetzes, beispielsweise einer Betriebszentrale eines Telecommunications Management Networks (TMN), übermittelt. Diese überprüft die Barcode-Daten, ermittelt Konfigurationsdaten und konfiguriert anhand der Konfigurationsdaten die an dem zu erbringenden Dienst beteiligten Einrichtungen des Telekommunikationsnetzes, beispielsweise Vermittlungsstellen, sogenannte Service Control Points (SCP) zur Steuerung von Dienstfunktionen eines Intelligenten Netzes (IN), Zugangsserver zum Internet oder dergleichen.

Der gesamte Verkaufs- und Konfigurationsvorgang ist sehr schnell, bequem und zuverlässig abgewickelt, da die gesamte Wirkkette vom Einlesen des Barcodes bis zur Konfiguration des Dienstes automatisch und ohne Eingreifen eines Bedieners abläuft. Der Dienst steht dem Teilnehmer sofort zur Verfügung.

Weitere Vorteile der Erfindung ergeben sich aus den abhängigen Ansprüchen sowie der Beschreibung.

In einer Variante der Erfindung ist der Erfassungseinrichtung eine Buchungseinrichtung, beispielsweise eine Kreditkarten-Abbuchungseinrichtung zugeordnet, die von der Erfassungseinrichtung die Barcode-Daten erhält und aus diesen einen Buchungsbetrag ermittelt. Zweckmäßigerweise quittiert die Buchungseinrichtung eine erfolgreiche Abbuchung des Buchungsbetrages von einem Konto des Teilnehmers der Erfassungseinrichtung und/oder dem Telekommunikationsnetz, so dass erst nach erfolgtem Zahlungsfluss der Dienst für den Teilnehmer konfiguriert wird.

Vorteilhafterweise übermittelt die Buchungseinrichtung, die Erfassungseinrichtung oder die Konfigurationseinrichtung einem Gebührenabrechnungsrechner des Telekommunikationsnetzes die Barcode-Daten oder aus diesen ermittelte Gebühren-Konfigurationsdaten, die beispielsweise eine Bankkonto-Nummer des Teilnehmers enthalten, so dass die laufenden Kosten für den neu eingerichteten Dienst sofort durch das Telekommunikationsnetz vergebührt werden können. Durch eine derart enge Kopplung der Gebührenabrechnungseinrichtungen des Telekommunikationsnetzes, also des Gebührenabrechnungsrechners und der Konfigurationseinrichtung, einerseits mit den Verkaufseinrichtungen, also mit der Erfassungseinrichtung und der Buchungseinrichtung andrerseits, können bequem auch Spezialtarife in Verbindung mit einem neuen, erfindungsgemäß mit einem Barcode versehenen Endgerät abgerechnet werden. Beispielsweise können dem Teilnehmer beim Kauf eines vorbestimmten Endgerätetyps sowie des diesem zugeordneten Dienstes oder beim Verkauf eines Dienstes über ein vorbestimmtes Verkaufsgeschäft Sonderkonditionen für die Nutzung des Dienstes seitens des Dienste-Anbieters eingeräumt werden.

Der neu eingerichtete Dienst kann unmittelbar von der Erfassungseinrichtung aus aktiviert werden, oder auch erst nachdem der Teilnehmer eine Freigabe-Kennung dafür an das Telekommunikationsnetz gesendet hat. Dazu sendet der Teilnehmer beispielsweise von seinem mit dem Telekommunikationsnetz verbundenen Endgerät aus eine Geheimzahl im Tonwahlverfahren (DTMF = Dial Tone Multi Frequency).

Neben dem standardisierten Erfassen von Barcode-Daten eines Dienstes über einen diesem zugeordneten Barcode können auch individuelle, für den jeweiligen Teilnehmer spezifische Teilnehmer-Daten, z.B. eine Rufnummer und/oder eine Kontonummer des Teilnehmers, über die Erfassungseinrichtung erfasst und an die Konfigurationseinrichtung übermittelt werden. Die Teilnehmer-Daten können beispielsweise über eine Tastatur oder vorzugsweise über eine Spracherkennung in die Erfassungseinrichtung eingegeben werden.

Im Folgenden werden die Erfindung und ihre Vorteile anhand eines Ausführungsbeispiels unter Zuhilfenahme der Zeichnung dargestellt.

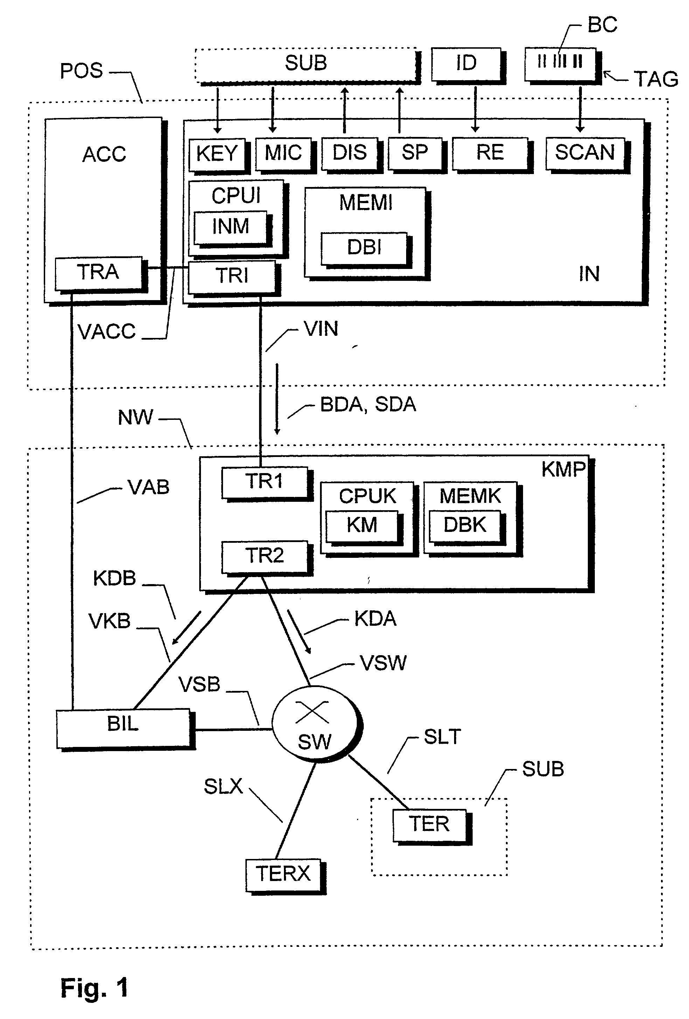

- Figur 1: zeigt eine beispielhafte, sehr schematische Anordnung zur Ausführung der Erfindung mit einer Erfassungseinrichtung IN, einer Buchungseinrichtung ACC, einer Konfigurationseinrichtung KMP sowie einem Barcode-Kennzeichner TAG.

Figur 1 zeigt von einem Telekommunikationsnetz NW eine als Ortsvermittlungsstelle arbeitende Vermittlungsstelle SW mit einem über einen leitungsgebundenen oder drahtlosen Teilnehmeranschluss SLX angeschlossenen Endgerät TERX, eine über eine Verbindung VSW mit der Vermittlungsstelle SW verbundene Konfigurationseinrichtung KMP und einen Gebührenabrechnungsrechner BILL, der über eine Verbindung VSB mit der Vermittlungsstelle SW, und über eine Verbindung VKB mit der Konfigurationseinrichtung KMP verbunden ist. Die Verbindungen VKB, VSW und VSB können beispielsweise auf einem LAN (Local Area Network), einem WAN (Wide Area Network) oder einem Signalisierungsnetzwerk des Telekommunikationsnetzes NW ständig aufgebaut sein oder auf Bedarf aufgebaut werden. Das Telekommunikationsnetz NW ist beispielsweise ein ISDN-Telekommunikationsnetz (ISDN = Integrated Services Digital Network), ein Mobilfunk-Telekommunikationsnetz oder ein gemischtes Sprachund Datennetzwerk und weist auch weitere, aus Gründen der Übersichtlichkeit nicht gezeigte Verbindungsleitungen, Vermittlungsstellen und Vorfeldeinrichtungen etc. auf. Die Vermittlungsstelle SW bedient auch weitere, nicht dargestellte Teilnehmeranschlüsse. Das im vorliegenden Fall als sogenanntes Intelligentes Netz arbeitende Telekommunikationsnetz NW sowie die dabei als sogenannter Service Switching Point (SSP) arbeitende Vermittlungsstelle SW erbringen für diese Teilnehmeranschlüsse Telekommunikations-Dienste, beispielsweise Gesprächs- oder Datenverbindungen sowie Telekommunikations-Dienste eines Intelligenten Netzes.

Die Konfigurationseinrichtung KMP ist ein Betriebsrechner eines zentralen Betriebsrechnersystems eines Telecommunications Management Networks (TMN), das außer der Konfigurationseinrichtung KMP auch weitere untereinander verbundene und teilweise redundant arbeitende, nicht gezeigte Betriebsrechner aufweist. Die Konfigurationseinrichtung KMP konfiguriert Dienste des Telekommunikationsnetzes NW, indem sie für den jeweiligen Dienst erforderliche Konfigurationsdaten an die an der Erbringung des Dienstes beteiligten, in Figur 1 größtenteils nicht gezeigten Einrichtungen des Telekommunikationsnetzes NW versendet.

Die Konfigurationseinrichtung KMP kann auch ein Einzelplatzrechner sein, z.B. ein der Vermittlungsstelle SW zugeordneter Bedienplatzrechner, oder in die Vermittlungsstelle SW integriert sein. Die Konfigurationseinrichtung KMP kann auch Teil von nicht gezeigten Einrichtungen, beispielsweise Zugangsrechnern oder Service Control Points, sein.

Die Konfigurationseinrichtung KMP weist Verbindungsmittel TR1 und TR2, ein Steuermittel CPUK und Speichermittel MEMK auf. Bei der Konfigurationseinrichtung KMP kann es sich um einen Server handeln, der durch ein UNIX-Betriebssystem oder ein Windows-NT-Betriebssystem betrieben wird. Über das Verbindungsmittel TR2, das beispielsweise eine Ethernet-Schnittstellenkarte ist, sendet und empfängt die Konfigurationseinrichtung KMP Daten auf den Verbindungen VKB und VSW. Über das Verbindungsmittel TR1, das z.B. ein ISDN-Adapter oder ein Modem ist, sendet und empfängt die Konfigurationseinrichtung KMP Daten von einer Erfassungseinrichtung IN auf einer Verbindung VIN. Das Steuermittel CPUK ist ein Prozessor oder ein Cluster von Prozessoren, das die Befehle eines Betriebssystems ausführt, das in den Speichermitteln MEMK gespeichert ist. Weiterhin sind in den Speichermitteln MEMK, das beispielsweise eine Festplatte oder RAM-Bausteine umfasst, Programmcode-Sequenzen von Programm-Modulen gespeichert, die von dem Steuermittel CPUK ausgeführt werden und die Funktionen der Konfigurationseinrichtung KMP steuern. Die Verbindungsmittel TR1 und TR2, das Steuermittel CPUK und die Speichermittel MEMK sind durch in Figur 1 nicht dargestellte Verbindungen untereinander verbunden.

Die Erfassungseinrichtung IN sowie eine Buchungseinrichtung ACC sind einer Verkaufsstelle POS zugeordnet, in der Telekommunikations-Dienste allein oder in Verbindung mit Telekommunikations-Endgeräten verkauft werden. Neben den im Folgenden noch näher erläuterten Funktionen können die Erfassungseinrichtung IN und die Buchungseinrichtung ACC auch die Funktionen einer Registrierkasse erfüllen.

Eine wesentliche Komponente der Erfassungseinrichtung IN, die an sich im Wesentlichen wie ein Personal Computer aufgebaut ist, ist ein als Einlesemittel dienender Scanner SCAN zum Einlesen von Barcodes. Die Erfassungseinrichtung IN weist ein als Sende- und Empfangsmittel arbeitendes Verbindungsmittel TRI auf, bei dem es sich beispielsweise um ein Modem oder um einen ISDN-Adapter handelt. Mit dem Verbindungsmittel TRI kann die Erfassungseinrichtung IN über das Telekommunikationsnetz NW die Verbindung VIN zu der Konfigurationseinrichtung KMP aufbauen und Daten beispielsweise über den Standard V.24 der ITU (ITU = International Telecommunication Union) oder über TCP/IP (= Transmission Control Protocol/ Internet Protocol) übertragen. Ferner ist die Erfassungseinrichtung IN mit Hilfe der Verbindungsmittel TRI über eine beispielsweise als Ethernet-Verbindung ausgestaltete Verbindung VACC mit der Buchungseinrichtung ACC verbunden.

Weiterhin weist die Erfassungseinrichtung IN ein Steuermittel CPUI sowie Speichermittel MEMI auf. Das Steuermittel CPUI ist ein Prozessor, mit dem in den Speichermitteln MEMI gespeicherter Programm-Code von einem die Erfassungseinrichtung IN betreibenden Betriebssystem sowie von Programm-Modulen ausgeführt werden kann. Bei den Speichermitteln MEMI handelt es sich z.B. um eine Festplatte oder um RAM-Bausteine. Weiterhin weist die Erfassungseinrichtung IN ein Anzeigemittel DIS, Eingabemittel KEY sowie einen Kartenleser RE zum Einlesen von auf Speicherchipkarten oder Magnetkarten, beispielsweise auf Krankenkarten oder Kreditkarten, gespeicherten persönlichen Daten auf. Das Anzeigemittel DISA ist beispielsweise ein Computer-Monitor oder ein LCD-Display (Liquid Crystal Display). Das Eingabemittel KEY kann eine Tastatur oder eine Maus sein. Weiterhin weist die Erfassungseinrichtung IN einen Lautsprecher SP sowie ein Mikrofon MIC auf, mit denen Sprachaus- bzw. Spracheingabe möglich sind. Die Komponenten der Erfassungseinrichtung IN sind durch nicht dargestellte Verbindungen untereinander verbunden.

Ein Teilnehmer SUB wählt in der Verkaufsstelle POS ein neues Endgerät TER aus, beispielsweise ein ISDN-Telefon. Dieses soll an einen von der Vermittlungsstelle SW bereits als analogen Teilnehmeranschluss bedienten Teilnehmeranschluss SLT angeschlossen werden. Mit Hilfe eines Strich- oder Barcodes BC, der an dem Endgerät TER oder dessen nicht dargestellter Verpackung angebracht ist, ist zumindest ein Telekommunikations-Dienst identifizierbar, den das Telekommunikationsnetz NW im Zusammenwirken mit dem Endgerät TER erbringen kann. Im vorliegenden Fall macht der Barcode BC das Endgerät TER als ISDN-Endgerät identifizierbar. Das Endgerät TER, dessen Verpackung, ein Etiketten-Aufkleber oder eine in der Verkaufsstelle POS ausliegende Karte mit dem Barcode BC dienen als Barcode-Kennzeichner TAG. Der Barcode BC kann auch weitere, das Endgerät TER kennzeichnende Daten darstellen, beispielsweise dessen Hersteller und Typ, sowie auch Daten nicht genormter, speziell auf die Bauart des Endgerätes TER abgestimmte Dienstfunktionen. Der Hersteller des Endgerätes TER kann z.B. über eine strichcodierte sogenannte Internationale Lokationsnummer (ILN), der Typ über eine Internationale Artikelnummerierung (EAN) identifiziert werden. Weitere Details zu einem möglichen Aufbau eines Barcodes, z.B. Länderkennziffern, Prüfcodes, mengen- oder stückzahlabhängig definierbare Codes, Nummern von Versandeinheiten (NVE) können z.B. bei der Centrale für Coorganisation GmbH (CCG, Maarweg 133, 50825 Köln, http://www.ccg.de) erfahren werden. Andere Barcode-Systeme, anhand derer der Barcode BC aufgebaut sein kann, sind beispielsweise der sogenannte "Code 128" oder der sogenannte "Interleave 2 von 5". Ferner kann für den Barcode BC auch ein Barcode-System eigens definiert werden.

Es ist auch möglich, dass eigens eine ILN für Telekommunikationsdienste im Allgemeinen reserviert ist und dass über die EAN sowohl ein bestimmter Telekommunikationsdienst als auch dessen Hersteller und/oder Erbringer identifizierbar ist.

Neben dem erwähnten Aufbau gemäß dem Schema der CCG, kann der Barcode BC auch nach einem freien, eigens für Telekommunikations-Dienste definierten Schema aufgebaut sein. Ferner können auf dem Barcode-Kennzeichner TAG auch mehrere Barcodes angebracht sein, wobei jeder Barcode dann einem Telekommunikations-Dienst zugeordnet ist und wobei vorzugsweise neben jedem Barcode kurz in Worten und/oder Symbolen erläutert ist, für welchen Dienst der Barcode steht. In jedem Fall jedoch macht der jeweilige Barcode den Dienst eindeutig identifizierbar.

Der Barcode BC kann auch blockweise modular aufgebaut sein, so dass vorliegend das Endgerät TER nicht nur durch einen ersten Barcode-Block einem Hersteller "X" zugeordnet werden kann, sondern auch in einem zweiten Barcode-Block als ISDN-Endgerät identifizierbar ist. Anhand eines dritten Barcode-Blockes ist zudem erkennbar, dass mit dem Endgerät TER auch beispielsweise eine Textübermittlung UUS3 des Typs 3 (UUS = User-to-User-Signalling) sowie der Telekommunikations-Dienst "Makeln" möglich sind.

Der Barcode wird durch den Scanner SCAN eingelesen. Dieser übermittelt den Barcode BC dem Steuermittel CPUI, das Programmcode eines Erfassungsmoduls INM ausführt. Das Erfassungsmodul INM ist ein Programm-Modul, das die Erfassungseinrichtung IN zur Erfassung und Auswertung des Barcodes BC steuert. Mit Hilfe einer Einlesefunktion liest das Erfassungsmodul INM den Barcode BC ein. Eine Auswerte- und Sendefunktion fragt dann aus im Programmcode des Erfassungsmoduls INM gespeicherten Daten oder aus einer Datenbank DBI, die in den Speichermitteln MEMI gespeichert ist, dem Barcode BC zugeordnete Barcode-Daten BDA ab. Dabei wird der Barcode BC beispielsweise in eine Ziffernfolge umgewandelt. Es ist jedoch auch möglich, dass die Barcode-Daten BDA pro Telekommunikations-Dienst bereits jeweils einen von dem Erfassungsmodul INM auf Plausibilität geprüften Kennzeichner aus Ziffern und/oder Buchstaben enthalten. Ferner können die Barcode-Daten BDA auch anstatt des Barcodes BC oder diesen ergänzend Daten enthalten, die dem Barcode BC zugeordnet und in der Datenbank DBI abgelegt sind. Die Barcode-Daten BDA übergibt die Auswerte- und Sendefunktion des Erfassungsmoduls INM an die Verbindungsmittel TRI zusammen mit einer Anweisung, diese an die Konfigurationseinrichtung KMP zu versenden.

Zusätzlich zu dem Barcode BC erfasst die Erfassungseinrichtung IN auch für den Teilnehmer SUB spezifische Teilnehmer-Daten SDA, vorliegend z.B. die dem Teilnehmeranschluss SLT zugeordnete Rufnummer oder den Namen des Teilnehmers SUB. Die Rufnummer wird z.B. durch den Teilnehmer SUB an einer Tastatur der Eingabemittel KEY eingegeben. Es ist auch möglich, dass der Teilnehmer SUB die Rufnummer ausspricht und die Erfassungseinrichtung IN diese dann mit Hilfe des Mikrofons MIC erfasst und mit einer von dem Steuermittel CPUI ausgeführten Spracherkennungssoftware in eine Ziffernfolge umsetzt. Die Anweisungen, die zur Eingabe der Rufnummer erforderlich sind, gibt die Erfassungseinrichtung IN über die Anzeigemittel DIS sowie den Lautsprecher SP aus. Die Erfassungseinrichtung IN übermittelt anschließend die Rufnummer als Teilnehmer-Daten SDA an die Konfigurationseinrichtung KMP. Das Erfassungsmodul INM kann die Barcode-Daten BDA und die Teilnehmer-Daten SDA als bereits miteinander verknüpfte Datenstrukturen an die Konfigurationseinrichtung KMP senden.

Die Konfigurationseinrichtung KMP empfängt die Barcode-Daten BDA und die Teilnehmer-Daten SDA mit Hilfe einer Empfangsfunktion eines Konfigurationsmoduls KM, dessen Programmcode von dem Steuermittel CPUK ausgeführt wird. Das Konfigurationsmodul KM ist ein Programm-Modul, das die Konfigurationseinrichtung KMP zur Erfassung und Auswertung der Barcode-Daten BDA sowie zur anschließenden Konfiguration der Vermittlungsstelle SW steuert. Anhand der Rufnummer ermittelt das Konfigurationsmodul KM aus einer in den Speichermitteln MEMK abgelegten Datenbank DBK, dass der Teilnehmeranschluss SLT von der Vermittlungsstelle SW bedient wird, anhand der Barcode-Daten BDA, dass das neu gekaufte Endgerät TER ein ISDN-Endgerät ist und die Dienste "UUS3" sowie "Makeln" freigeschaltet werden sollen. Mit Hilfe von in der Datenbank DBK oder im Programmcode des Konfigurationsmoduls KM gespeicherter Daten ermittelt eine Konfigurationsfunktion des Konfigurationsmoduls KM somit Konfigurationsdaten KDA aus den Barcode-Daten BDA. Die Konfigurationsdaten KDA übermittelt das Konfigurationsmodul KM mit Hilfe einer Sendefunktion an die Vermittlungsstelle SW, die daraufhin den Teilnehmeranschluss SLT als ISDN-Teilnehmeranschluss einrichtet und die Dienste "UUS3" und "Makeln" freischaltet.

Damit die neu eingerichteten Dienste durch das Telekommunikationsnetz NW vergebührt werden können, übermittelt das Konfigurationsmodul KM die Konfigurationsdaten KDA auch an den Gebührenabrechnungsrechner BILL. Es ist auch möglich, dass das Konfigurationsmodul KM aus den Barcode-Daten BDA speziell auf den Gebührenabrechnungsrechner BILL abgestimmte Gebühren-Konfigurationsdaten KDB ermittelt und an diesen versendet. Somit kann die Vermittlungsstelle SW für z.B. die Nutzung des UUS3-Dienstes oder sonstiger ISDN-Dienste anfallende Gebühren dem Gebührenabrechnungsrechner BILL zur Verbuchung für den Teilnehmer SUB auf der Verbindung VSB übermitteln.

Nachdem der Teilnehmeranschluss SLT für das Endgerät TER geeignet konfiguriert ist, sendet die Vermittlungsstelle SW eine Quittung an die Konfigurationseinrichtung KMP, welche ihrerseits die erfolgreiche Konfiguration an die Erfassungseinrichtung IN quittiert. Die Erfassungseinrichtung IN zeigt die Quittung an der Anzeigeeinrichtung DIS an. Es ist jedoch auch möglich, dass die Vermittlungsstelle SW oder die Konfigurationseinrichtung KMP der Erfassungseinrichtung IN eine Dokumentation der neu konfigurierten Dienste zusendet, die die Erfassungseinrichtung IN an einen nicht dargestellten Drucker zum Ausdrucken für den Teilnehmer SUB weitersendet. Eine solche Dokumentation und/oder Bedienhinweise zu den neu konfigurierten Diensten kann beispielsweise auch auf einem durch die Erfassungseinrichtung IN für den Teilnehmer SUB ausgegebenen Quittungsbeleg angegeben sein.

Die neue Konfiguration kann sofort oder zu einem an der Erfassungseinrichtung IN eingegeben Zeitpunkt aktiv sein oder erst dann, wenn der Teilnehmer SUB an der Erfassungseinrichtung IN oder an dem neu an den Teilnehmeranschluss SLT angeschlossenen Endgerät TER eine Freigabekennung eingegeben hat, z.B. in Form eines per DTMF (Dial Tone Multi Frequency) übertragenen Geheimcodes.

Die neue Konfiguration kann jedoch auch erst dann aktiv sein, wenn eine erfolgreiche Zahlung stattgefunden hat. Zur Abwicklung eines Zahlungs- oder Buchungsvorgangs ist die Erfassungseinrichtung IN mit der Buchungseinrichtung ACC verbunden. Diese ist beispielsweise ein für Buchungszwecke geeignetes Rechnersystem, an das die Verkaufsstelle POS angeschlossen ist. Die Buchungseinrichtung ACC kann jedoch auch ein Buchungs-Programm-Modul sein, dessen Programmcode von dem Steuermittel CPUI der Erfassungseinrichtung IN ausgeführt wird. Die Buchungseinrichtung ACC empfängt die Barcode-Daten BDA oder einen für die Buchungseinrichtung ACC relevanten Teil der Barcode-Daten BDA von der Erfassungseinrichtung IN über ein Verbindungsmittel TRA, beispielsweise eine Schnittstellenkarte für ein LAN. Aus den Barcode-Daten BDA ermittelt die Buchungseinrichtung ACC einen diesen zugeordneten Buchungsbetrag, der sich vorliegend aus den Kosten für die Umstellung des Teilnehmeranschlusses SLT auf die oben erläuterten Dienste sowie aus dem Preis für das Endgerät TER zusammensetzt.

Ferner wird eine Kreditkarte ID in den Kartenleser RE eingeführt, so dass die Erfassungseinrichtung IN Namen und Adresse des Teilnehmers SUB sowie dessen Kreditkartennummer als Teilnehmer-Daten SDA aus der Kreditkarte ID auslesen und der Buchungseinrichtung ACC übermitteln kann. Die Buchungseinrichtung ACC verbucht dann den Buchungsbetrag einem Konto des Teilnehmers SUB. Es ist auch möglich, dass der Teilnehmer SUB bar bezahlt und die Buchungseinrichtung ACC die korrekte Zahlung verbucht. Nach erfolgreich vollzogenem Buchungsvorgang sendet die Buchungseinrichtung ACC eine Quittungsmeldung an die Erfassungseinrichtung IN. Es ist möglich, dass die Erfassungseinrichtung IN erst dann die Barcode-Daten BDA und die Teilnehmer-Daten SDA an die Konfigurationseinrichtung KMP sendet, wenn sie die Quittungsmeldung erhalten hat.

Die Buchungseinrichtung ACC sendet die Quittungsmeldung über den vollzogenen Buchungsvorgang sowie die Kreditkartennummer des Teilnehmers SUB auf einer Verbindung VAB auch an den Gebührenabrechnungsrechner BILL, so dass dieser anschliessend für die Nutzung des Teilnehmeranschlusses SLT anfallende Gebühren abrechnen kann.

Weiter ist es möglich, dass der Gebührenabrechnungsrechner BILL der Buchungseinrichtung ACC Tarifdaten zusendet, beispielsweise zu in Verbindung mit dem Kauf eines bestimmten Endgerätetyps oder zu mit der Buchung eines bestimmten Telekommunikations-Dienstes verbundenen Spezialtarifen. Vorliegend kann der Gebührenabrechnungsrechner BILL der Buchungseinrichtung ACC z.B. eine Gutschrift für die Umstellung des Teilnehmeranschlusses SLT auf ISDN zusenden, die die Buchungseinrichtung ACC auf den zu verbuchenden Kaufpreis des Endgerätes TER anrechnen kann.

Nach erfolgreichem Buchungsvorgang und erfolgreicher Konfiguration des Teilnehmeranschlusses SLT sendet die Erfassungseinrichtung IN die Daten zum Kauf des Endgerätes TER sowie der damit verbundenen Telekommunikations-Dienste an einen in Figur 1 nicht dargestellten Drucker, so dass der Teilnehmer SUB eine Quittung über den gesamten Vorgang erhält.

In einer weiteren Variante handelt es sich bei dem Endgerät TER um ein Mobilfunk-Endgerät, für das der Teilnehmeranschluss SLT nebst einiger Dienste neu geschaltet wird. Auf der Verpackung des Endgerätes TER oder einer SIM-Karte (SIM = Subscriber Identity Module) für das Endgerät TER oder auch auf einer neben der Erfassungseinrichtung IN angeordneten Liste sind dann Barcodes BC von mit dem Endgerät TER nutzbaren Telekommunikations-Diensten angeordnet. Die Barcodes BC werden mit dem Scanner SCAN eingelesen und an der Anzeigevorrichtung DIS angezeigt. Der Teilnehmer SUB wählt über die Eingabemittel KEY die von ihm gewünschten Telekommunikations-Dienste aus, so dass die Erfassungseinrichtung IN deren jeweilige Barcode-Daten BDA an die Konfigurationseinnchtung KMP zur Neueinrichtung des Teilnehmeranschlusses SLT senden kann. Über die obengenannte Spracherkennung kann der Teilnehmer SUB beispielsweise eine Wunsch-Rufnummer eingeben, deren Verfügbarkeit dann die Konfigurationseinrichtung KMP der Erfassungseinrichtung IN bestätigt oder negativ quittiert.

Durch die interaktive Kopplung zwischen Erfassungseinrichtung IN und Konfigurationseinrichtung KMP ist es möglich, dass speziell auf den Typ des Endgerätes TER abgestimmte Telekommunikations-Dienste durch das Telekommunikationsnetz NW erbracht werden können sowie ein speziell auf den Typ des Endgerätes TER abgestimmter Freischalte- und Testvorgang für das Endgerät TER ausgeführt wird. Prüfinformationen für vollständige und plausible Übertragung der Barcode-Daten BDA können ebenfalls wechselseitig zwischen Erfassungseinrichtung IN und Konfigurationseinrichtung KMP übermittelt werden.

Ferner ist eine unter dem Begriff "Efficient Consumer Response (ECR)" zusammengefasste Prozeßoptimierung der Distributionskette für Telekommunikations-Dienste realisierbar, bei der das Kauf- und Nutzungsverhalten von Telekommunikations-Diensten des beispielhaft gewählten Teilnehmers SUB erfasst und ausgewertet wird, so dass der jeweilige Kundenbedarf erkannt und die individuelle Nachfrage durch eine optimierte Logistikkette gedeckt werden kann.

Das Erfassungsmodul INM kann auch eine im Wesentlichen bekannte Scannerkasse erfindungsgemäß zur Wahrnehmung der Funktionen der Erfassungseinrichtung IN steuern, wenn die Scannerkasse mit einem Verbindungsmittel TRI ausgerüstet ist. Das Konfigurationsmodul KM kann eine im Wesentlichen bekannte Konfigurationseinrichtung, beispielsweise einen Betriebsrechner eines Telecommunications Management Network, erfindungsgemäß steuern, wenn bei diesem Verbindungsmittel TR1 vorgesehen sind. Ferner kann die Buchungseinrichtung ACC auch in die Erfassungseinrichtung IN integriert sein.

Die Erfassungseinrichtung IN kann auch ein Sprachmuster des Teilnehmer SUB erfassen und an Konfigurationseinrichtung KMP senden. Anhand dieses Sprachmusters kann sich der Teilnehmer SUB später z.B. zu der erwähnten Freigabe der neu eingerichteten Dienste über das Endgerät TER bei der Konfigurationseinrichtung KMP autorisieren. Ferner kann der Teilnehmer SUB später über das Endgerät TER interaktiv mit der Konfigurationseinrichtung KMP Dienste neu einrichten oder bereits eingerichtete Dienste manipulieren. Auch dabei kann das Sprachmuster zur Identifizierung/Autorisierung des Teilnehmers SUB dienen.

In einer weiteren Variante werden von der Erfassungseinrichtung IN sowohl ein dem Endgerät TER zugeordneter Endgerät-Barcode als auch ein Dienst-Barcode erfasst, der einem durch das Telekommunikationsnetz NW im Zusammenwirken mit dem Endgerät TER zu erbringenden Telekommunikationsdienst zugeordnet ist. Die Erfassungseinrichtung IN und/oder die Konfigurationseinrichtung KMP überprüfen dann, ob das Endgerät TER für den Telekommunikationsdienst geeignet ist, z.B. über ein Display zur Anzeige einer CLIP (Calling Line Identification Presentation) verfügt. Dazu werden beispielsweise anhand einer EXOR-Verknüpfung eine aus dem Endgerät-Barcode gewonnene und eine aus dem Dienst-Barcode gewonnene Bitfolge verglichen. Der Telekommunikationsdienst wird nur dann neu eingerichtet, wenn das Endgerät TER für diesen geeignet ist.

## Patentansprüche

1. Verfahren zur Konfiguration eines von einem Telekommunikationsnetz (NW) für einen Teilnehmer (SUB) zu erbringenden Dienst, **dadurch gekennzeichnet, dass**
- dem zu erbringenden Dienst ein Barcode (BC) zugewiesen wird,
- der Barcode (BC) durch eine Erfassungseinrichtung (IN) von einem Barcode-Kennzeichner (TAG) eingelesen wird,
- die Erfassungseinrichtung (IN) einer Konfigurationseinrichtung (KMP) des Telekommunikationsnetzes (NW) aus dem Barcode (BC) ermittelte Barcode-Daten (BDA) übermittelt und
- die Konfigurationseinrichtung (KMP) anhand der Barcode-Daten (BDA) den Dienst für den Teilnehmer (SUB) konfiguriert.

2. Verfahren nach Anspruch 1, **dadurch gekennzeichnet, dass** die Erfassungseinrichtung (IN) einer Buchungseinrichtung (ACC) die Barcode-Daten (BDA) zumindest teilweise übermittelt, dass die Buchungseinrichtung (ACC) einen den Barcode-Daten (BDA) zugeordneten Buchungsbetrag ermittelt und dass die Buchungseinrichtung (ACC) den Buchungsbetrag verbucht.

3. Verfahren nach Anspruch 2, **dadurch gekennzeichnet, dass** die Buchungseinrichtung (ACC) eine Quittungsmeldung über den vollzogenen Buchungsvorgang an das Telekommunikationsnetz (NW) und/oder an die Erfassungseinrichtung (IN) sendet.

4. Verfahren nach Anspruch 1, **dadurch gekennzeichnet, dass** die Erfassungseinrichtung (IN) für den Teilnehmer (SUB) spezifische Teilnehmer-Daten (SDA) insbesondere über eine Spracherkennung (MIC, CPU) erfasst, dass die Erfassungseinrichtung (IN) die Teilnehmer-Daten (SDA) der Konfigurationseinrichtung (KMP) übermittelt und dass die Konfigurationseinrichtung (KMP) anhand der Teilnehmer-Daten (SDA) den Dienst für den Teilnehmer (SUB) konfiguriert.

5. Verfahren nach Anspruch 1, **dadurch gekennzeichnet, dass** die Barcode-Daten (BDA) oder anhand derer ermittelte Gebühren-Konfigurationsdaten (KDB) einem Gebührenabrechnungsrechner (BIL) des Telekommunikationsnetzes (NW) übermittelt werden.

6. Verfahren nach Anspruch 1, **dadurch gekennzeichnet, dass** das Telekommunikationsnetz (NW) den Dienst in Abhängigkeit von einer durch den Teilnehmer (SUB) eingegebenen Freigabekennung für den Dienst freischaltet.

7. Barcode-Kennzeichner (TAG) zur Konfiguration eines von einem Telekommunikationsnetz (NW) für einen Teilnehmer (SUB) zu erbringenden Dienst, **dadurch gekennzeichnet, dass** der Barcode-Kennzeichner (TAG) einen Barcode (BC) zur Identifizierung des zu erbringenden Dienstes aufweist, der durch eine Erfassungseinrichtung (IN) eingelesen werden kann und anhand dessen Barcode-Daten (BDA) eine Konfigurationseinrichtung (KMP) des Telekommunikationsnetzes (NW) den Dienst für den Teilnehmer (SUB) konfigurieren kann.

8. Konfigurationsmodul (KM) zur Steuerung der Konfiguration eines von einem Telekommunikationsnetz (NW) für einen Teilnehmer (SUB) zu erbringenden Dienst, **dadurch gekennzeichnet, dass** dieses Programm-Modul folgende Funktionen steuert:
- eine Empfangsfunktion zum Empfangen von durch eine Erfassungseinrichtung (IN) aus einem Barcode (BC) ermittelten Barcode-Daten (BDA), wobei der Barcode (BC) dem für den Teilnehmer (SUB) zu erbringenden Dienst zugeordnet ist,
- eine Konfigurationsfunktion, die derart ausgestaltet ist, dass die Konfigurationsdaten (KDA) zur Konfiguration des Dienstes für den Teilnehmer (SUB) anhand der Barcode-Daten (BDA) ermittelt werden können,
- eine Sendefunktion zum Senden der Konfigurationsdaten (KDA) an zumindest einen Knotenpunkt (SW) des Telekommunikationsnetzes (NW).

9. Konfigurationseinrichtung (KMP) zur Konfiguration eines von einem Telekommunikationsnetz (NW) für einen Teilnehmer (SUB) zu erbringenden Dienst, mit Empfangsmitteln (TR1), Konfigurationsmitteln (CPUK, MEMK, DBK) und Sendemitteln (TR2), **dadurch gekennzeichnet, dass** die Konfigurationseinrichtung (KMP) zur Steuerung der Empfangsmittel (TR1), Konfigurationsmittel (CPUK, MEMK, DBK) und Sendemittel (TR2) ein Konfigurationsmodul (KM) nach Anspruch 8 aufweist.

10. Erfassungsmodul (INM) zur Steuerung der Konfiguration eines von einem Telekommunikationsnetz (NW) für einen Teilnehmer (SUB) zu erbringenden Dienst, **dadurch gekennzeichnet, dass** dieses Programm-Modul folgende Funktionen steuert:
. eine Einlesefunktion, die derart ausgestaltet ist, das ein auf einem Barcode-Kennzeichner (TAG) dargestellte Barcode (BC), dem ein bestimmter zu erbringender Dienst zugewiesen ist, eingelesen kann und
. eine Auswerte- und Sendefunktion, die derart ausgestaltet ist, dass aus dem Barcode (BC) ermittelte Barcode-Daten (BDA) an eine Konfigurationseinrichtung (KMP) des Telekommunikationsnetzes (NW) übermittelt werden können, so dass die Konfigurationseinrichtung (KMP) den Dienst für den Teilnehmer (SUB) konfigurieren kann.

11. Erfassungseinrichtung (IN) zur Konfiguration eines von einem Telekommunikationsnetz (NW) für einen Teilnehmer (SUB) zu erbringenden Dienst, mit Einlesemitteln (SCAN) und Auswerte- und Sendemitteln (CPUI, TRI), **dadurch gekennzeichnet, dass** die Erfassungseinrichtung (IN) zur Steuerung der Einleseeinrichtung und einer Auswerte- und Sendeeinrichtung ein Erfassungsmodul (INM) nach Anspruch 10 aufweist.

## Claims

1. Method for configuring a service to be provided for a subscriber (SUB) by a telecommunications network (NW), **characterised in that**
- a barcode (BC) is assigned to the service to be provided,
- the barcode (BC) is read in from a barcode tag (TAG) by a recording device (IN),
- the recording device (IN) communicates barcode data (BDA) determined from the barcode (BC) to a configuration device (KMP) of the telecommunications network (NW) and
- the configuration device (KMP) configures the service for the subscriber (SUB) using the barcode data (BDA).

2. Method according to claim 1, **characterised in that** the recording device (IN) at least partially communicates the barcode data (BDA) to an accounting device (ACC), the accounting device (ACC) determines an amount to be registered associated with the barcode data (BDA) and the accounting device (ACC) bills the amount registered.

3. Method according to claim 2, **characterised in that** the accounting device (ACC) sends an acknowledge message about the completed accounting process to the telecommunications network (NW) and/or to the recording device (IN).

4. Method according to claim 1, **characterised in that** the recording device (IN) records subscriber data (SDA) specific to the subscriber (SUB) in particular via voice recognition (MIC, CPU), the recording device (IN) communicates the subscriber data (SDA) to the configuration device (KMP) and the configuration device (KMP) configures the service for the subscriber (SUB) using the subscriber data (SDA).

5. Method according to claim 1, **characterised in that** the barcode data (BDA) or thereby determined charges configuration data (KDB) are communicated to a billing computer (BIL) of the telecommunications network (NW).

6. Method according to claim 1, **characterised in that** the telecommunications network (NW) releases the service as a function of a release code for the service input by the subscriber (SUB).

7. Barcode tag (TAG) for configuring a service to be provided for a subscriber (SUB) by a telecommunications network (NW), **characterised in that** the barcode tag (TAG) has a barcode (BC) for identifying the service to be provided, which can be read in by a recording device (IN) and using the barcode data (BDA) of which a configuration device (KMP) of the telecommunications network (NW) can configure the service for the subscriber (SUB).

8. Configuration module (KM) for controlling the configuration of a service to be provided for a subscriber (SUB) by a telecommunications network (NW), **characterised in that** this program module controls the following functions:
- a receiving function for receiving barcode data (BDA) determined from a barcode (BC) by a recording device (IN), the barcode (BC) being associated with the service to be provided for the subscriber (SUB),
- a configuration function which is designed in such a way that the configuration data (KDA) for configuring the service for the subscriber (SUB) can be determined using the barcode data (BDA),
- a sending function for sending the configuration data (KDA) to at least one node point (SW) of the telecommunications network (NW).

9. Configuration device (KMP) for configuring a service to be provided for a subscriber (SUB) by a telecommunications network (NW), with receiving means (TR1), configuration means (CPUK, MEMK, DBK) and sending means (TR2), **characterised in that** the configuration device (KMP) has a configuration module (KM) according to claim 8 for controlling the receiving means (TR1), configuration means (CPUK, MEMK, DBK) and sending means (TR2).

10. Recording module (INM) for controlling the configuration of a service to be provided for a subscriber (SUB) by a telecommunications network (NW), **characterised in that** this program module controls the following functions:
- a read-in function which is designed in such a way that a barcode (BC) illustrated on a barcode tag (TAG), to which a particular service to be provided is assigned, can be read in and
- an evaluating and sending function which is designed in such a way that barcode data (BDA) determined from the barcode (BC) can be communicated to a configuration device (KMP) of the telecommunications network (NW), so the configuration device (KMP) can configure the service for the subscriber (SUB).

11. Recording device (IN) for configuring a service to be provided for a subscriber (SUB) by a telecommunications network (NW), with read-in means (SCAN) and evaluation and sending means (CPUI, TRI), **characterised in that** the recording device (IN) has a recording module (INM) according to claim 10 for controlling the read-in device and an evaluation and sending device.

## Revendications

1. Procédé de configuration d'un service à apporter pour un abonné (SUB) par un réseau de télécommunication (NW), **caractérisé en ce que** :
- un code barre (BC) est attribué à un service à apporter
- le code barre (BC) est lu par un dispositif de saisie (IN) par un identificateur à code barre (TAG),
- le dispositif de saisie (IN) transmet à un dispositif de configuration (KMP) du réseau de télécommunication (NW) les données du code barre (BDA) déterminé à partir du code barre (BC), et
- le dispositif de configuration (KMP) configure le service pour l'abonné (SUB) à l'aide des données du code barre (BDA).

2. Procédé selon la revendication 1, **caractérisé en ce que** le dispositif de saisie (IN) transmet au moins partiellement les données du code barre (BDA)au dispositif d'enregistrement (ACC), **en ce que** le dispositif d'enregistrement (ACC) détermine un montant d'enregistrement correspondant aux données du code barre (BDA) et **en ce que** le dispositif d'enregistrement (ACC) enregistre le montant d'enregistrement.

3. Procédé selon la revendication 2, **caractérisé en ce que** le dispositif d'enregistrement (ACC) envoie au réseau de télécommunication (NW) et/ou le dispositif de saisie (IN) un message de confirmation concernant le processus d'enregistrement réussi.

4. Procédé selon la revendication 1, **caractérisé en ce que** le dispositif de saisie (IN) saisit des données d'abonnés (SDA) spécifiques à l'abonnée (SUB), notamment par l'intermédiaire d'une reconnaissance vocale (MIC, CPU), **en ce que** le dispositif de saisie (IN) transmet les données de l'abonné (SDA) au dispositif de configuration (KMP) et **en ce que** le dispositif de configuration (KMP) configure le service pour l'abonné (SUB) à l'aide des données de l'abonné (SDA).

5. Procédé selon la revendication 1, **caractérisé en ce que** les données du code barre (BDA) ou les données de configuration des frais (KDB) déterminées à l'aide de celles-ci sont transmises à un ordinateur de facturation (BIL) du réseau de télécommunication (NW).

6. Procédé selon la revendication 1, **caractérisé en ce que** le réseau de télécommunication (NW) active le service en fonction d'une identification d'activation entré par l'abonné (SUB).

7. Identificateur à code barre (TAG) pour la configuration d'un service à apporter à un abonné (SUB) par un réseau de télécommunication (NW), **caractérisé en ce que** l'identificateur à code barre (TAG) comporte un code barre (BC) pour identifier le service à apporter, qui peut être lu par un dispositif de saisie (IN) et à l'aide des données de ce code barre (BDA) un dispositif de configuration (KMP) peut configurer le service du réseau de télécommunication (NW) pour l'abonné (SUB).

8. Module de configuration (KM) pour commander la configuration d'un service à apporter à l'abonné (SUB) par le réseau de télécommunication, **caractérisé en ce que** ce module de programme commande les fonctions suivantes :
- une fonction de réception pour recevoir des données de code barre (BDA) déterminées à partir d'un code barre (BC) par un dispositif de saisie (IN), moyennant quoi le code barre (BC) correspond au service à apporter à l'abonné (SUB),
- une fonction de configuration conçue de telle sorte que les données de configuration (KDA) peuvent être déterminées à l'aide des données du code barre (BDA) pour la configuration du service pour l'abonné (SUB),
- une fonction d'émission pour envoyer les données de configuration (KDA) à au moins un point nodal (SW) du réseau de télécommunication (NW).

9. Dispositif de configuration (KMP) pour la configuration d'un service à apporter par un réseau de télécommunication (NW) pour un abonné (SUB), avec des moyens de réception (TR1), des moyens de configuration (CPUK, MEMK, DBK) et des moyens d'émission (TR2), **caractérisé en ce que** le dispositif de configuration (KMP) comporte, pour la commande des moyens de réception (TR1), des moyens de configuration (CPUK, MEMK, DBK) et des moyens d'émission (TR2), un module de configuration (KM) selon la revendication 8.

10. Module de saisie (INM) pour commander la configuration d'un service à apporter à un abonné (SUB) par un réseau de télécommunication (NW), **caractérisé en ce que** ce module de programme commande les fonctions suivantes :
- une fonction de lecture conçue de telle sorte qu'un code barre (BC) représenté sur un identificateur à code barre (TAG) et auquel correspond un service à apporter, peut être lu, et
- une fonction d'analyse et d'émission conçue de telle sorte que les données du code barre (BDA) déterminées à partir du code barre (BC) puissent être transmises à un dispositif de configuration (KMP) du réseau de télécommunication (NW), de telle sorte que le dispositif de configuration (KMP) puisse configurer le service pour l'abonné (SUB).

11. Dispositif de saisie (IN) pour la configuration d'un service à apporter à l'abonné (SUB) par le réseau de télécommunication (NW), avec des moyens de lecture (SCAN) et des moyens d'analyse et d'émission (CPUI, TRI), **caractérisé en ce que** le dispositif de saisie (IN) comporte, pour la commande du dispositif de lecture et d'un dispositif d'analyse et d'émission, un module de saisie (INM) selon la revendication 10.
